# EUROPEAN PATENT SPECIFICATION

(11) **EP 4 266 458 B1**
(45) Date of publication and mention of the grant of the patent: **23.09.2026**
(21) Application number: 22919280.2
(22) Date of filing: 14.01.2022
(51) Int. Cl.: H01M 50/242, H01M 50/213, H01M 50/107, H01M 50/209, H01M 50/507, H01M 10/48

(54) **BATTERY, ELECTRICAL DEVICE, AND BATTERY PREPARATION METHOD AND DEVICE**
BATTERIE, ELEKTRISCHE VORRICHTUNG SOWIE BATTERIEHERSTELLUNGSVERFAHREN UND -VORRICHTUNG
BATTERIE, DISPOSITIF ÉLECTRIQUE ET PROCÉDÉ ET DISPOSITIF DE PRÉPARATION DE BATTERIE

(43) Date of publication of application: 25.10.2023
(73) Proprietor: Contemporary Amperex Technology (Hong Kong) Limited, Central, Central And Western District (HK)
(72) Inventor: QIAN, Ou, Ningde, Fujian 352100 (CN); CHEN, Xiaobo, Ningde, Fujian 352100 (CN); JIN, Qiu, Ningde, Fujian 352100 (CN); YANG, Piaopiao, Ningde, Fujian 352100 (CN)
(74) Representative: Gong, Jinping
(86) International application number: PCT/CN2022/072058
(87) International publication number: WO 2023/133808

(56) References cited:
- EP-A1- 2 418 709
- EP-A1- 2 418 709
- EP-A1- 3 934 017
- EP-A1- 4 310 983
- CN-A- 107 331 908
- CN-U- 206 992 243
- CN-U- 206 992 243
- JP-A- 2004 355 861
- JP-A- 2004 355 861

## Description

### TECHNICAL FIELD

The present application relates to the field of battery technologies, and in particular, to a battery, a power consumption device, and a method and device for producing a battery.

### BACKGROUND

Energy conservation and emission reduction are the key to the sustainable development of the automotive industry. In this case, electric vehicles have become an important part of the sustainable development of the automotive industry due to their advantages of energy conservation and environmental protection. For the electric vehicles, the battery technology is an important factor for their development.

Given that electric vehicles and large energy storage devices require high voltage and high capacity to meet cruising ability and high current output, therefore, how to increase energy density of batteries in a limited space has become an urgent technical problem to be solved in the battery technology.
EP 4 310 983 describes a battery pack including multiple battery cells arranged repeatedly in a unit structure, where the unit structure includes a plurality of first battery cells and second battery cells, and an electric apparatus including such battery pack. In some embodiments, given that the first battery cell has an extrusion force denoted as F1 when the first battery cell deforms by 15%, the first battery cell has a radius denoted as r1, the second battery cell has an extrusion force denoted as F2 when the second battery cell deforms by 15%, the second battery cell has a radius denoted as r2, and a ratio of the radius r2 of the first battery cell to the radius r1 of the second battery cell is denoted as β, when 0.1 ≤ β ≤ 1, a ratio δ of the extrusion force F2 of the second battery cell to the extrusion force F1 of the first battery cell satisfies 1.5 ≤ δ ≤ 2, and when 1 < β ≤ 2, δ satisfies 1.01 ≤ δ < 1.5. A smaller extrusion force leads to larger deformation during collision, so that more collision energy can be absorbed.
JP 2004 355861 illustrates a battery module with a plurality of secondary batteries electrically connected to each other to form two battery groups providing two electric control systems.
EP 2 418 709 describes a battery pack comprising a plurality of battery elements arranged next to one another in at least one packing layer with at least one deformation element arranged at least in some regions within a packing layer between at least two adjacent battery elements.

### SUMMARY

Embodiments of the present application provide a battery, a power consumption device, and a method and device for producing a battery, which could increase energy density of the battery.

In a first aspect, a battery is provided, and the battery includes: a plurality of first battery cells, a first battery cell being a cylinder, and a gap being provided between the plurality of first battery cells; a second battery cell disposed in the gap between the plurality of first battery cells, the second battery cell being configured to deform under a squeeze of the plurality of first battery cells to fit a shape of the gap; a box configured to accommodate the plurality of first battery cells and the second battery cell; and the second battery cell is provided with a pressure sensor, and the pressure sensor is configured to detect stress states of a plurality of first battery cells squeezing the second battery cell.

Therefore, according to the battery in the embodiments of the present application, the gap between the plurality of first battery cells in a cylindrical shape is fully utilized, which improves utilization of the space in the box, thereby increasing the energy density of the battery. Moreover, during the use of the battery, the plurality of first battery cells come into contact with each other and may collide, resulting in deformation of the first battery cells; the battery may expand in the charging and discharging process, which may cause the plurality of first battery cells in contact with each other to be squeezed and deformed; and when used in scenarios such as a vehicle, the battery may be subjected to an external force to cause the plurality of first battery cells to collide, resulting in deformation of the first battery cells. However, the deformation of the first battery cells may cause damage to a housing to further cause a leakage of an electrolytic solution, or may cause deformation of an electrode assembly in an interior of the first battery cell to lead to lithium plating, all of which lead to safety issues of the battery. Therefore, by providing the deformable second battery cell in the gap between the plurality of first battery cells, the squeeze between the plurality of first battery cells can be effectively reduced, thereby reducing the deformation of the first battery cells, improving the stability between the plurality of first battery cells, and further improving the safety of the battery. That is, the battery in the embodiment of the present application can greatly increase system energy density of a cylindrical battery and improve market competitiveness thereof, and could effectively reduce the failure of the battery.

In some embodiments, the battery includes: a plurality of battery cell groups arranged in a first direction, each of the plurality of battery cell groups including a plurality of first battery cells arranged in a second direction, the first direction, the second direction and an axial direction of the first battery cell being perpendicular to each other, and a plurality of second battery cells being respectively disposed in a plurality of gaps between two adjacent battery cell groups of the plurality of battery cell groups, so as to make full use of the space in the interior the battery and greatly improve the space utilization of the battery.

In some embodiments, orthographic projections of axes of all the first battery cells in the two adjacent battery cell groups on a first plane do not coincide, and the first plane is perpendicular to the first direction. In this way, the first battery cells in the two adjacent battery cell groups are arranged in a staggered manner, so that the space between adjacent curved surfaces could be fully utilized.

In some embodiments, the orthographic projections of the axes of all the first battery cells in the two adjacent battery cell groups on the first plane are evenly distributed. The battery cells in different battery cell groups may be arranged in dislocation, so that the space is properly utilized, the gap between the plurality of first battery cells is reduced, and the space utilization of the plurality of first battery cells in the battery is improved.

In some embodiments, the second battery cell is located in a gap formed by three adjacent first battery cells in the two adjacent battery cell groups.

When the plurality of battery cell groups are arranged in dislocation, every three first battery cells may form a relatively independent gap, and correspondingly, the second battery cell may be disposed in the gap formed by the three first battery cells to make full use of the gap, so as to further improve the space utilization of the battery.

In some embodiments, sections of the three adjacent first battery cells along a second plane are three circles, every two of the three circles are circumscribed circles of each other, and the second plane is perpendicular to the axial direction of the first battery cell.

In this way, regardless of the plurality of second battery cells disposed in the battery, the space utilization of the plurality of first battery cells in the battery can be greatly improved to make full use of the limited space of the box of the battery; and further, by providing the second battery cell in the gap between the plurality of battery cells, the gap between the first battery cells can be fully utilized, and the energy density of the battery is further increased. Moreover, since the second battery cell is disposed in the gap between the three first battery cells, when the plurality of first battery cells originally tangential to each other are subjected to an external pressure or expand to generate a pressure, the second battery cell can relieve the pressure and reduce the deformation of the first battery cells due to the action of the pressure, so that the three first battery cells are kept tangential to each other as much as possible to avoid the issues such as the leakage of the electrolytic solution or lithium plating caused by the deformation of the first battery cells, improving the safety performance of the battery.

In some embodiments, the second battery cell is provided with a liquid leak sensor, and the liquid leak sensor is configured to detect whether the first battery cell and/or the second battery cell leaks liquid, so as to find a liquid leak in time and avoid a short circuit caused by the liquid leak.

In some embodiments, the liquid leak sensor is disposed at one end of the second battery cell close to a first electrode terminal of the first battery cell.

In this way, the liquid leak sensor can detect whether there is a liquid leak near the first electrode terminal of the first battery cell in time, which avoids the short circuit of an electrical connection between the first electrode terminal and another component caused by the liquid leak, and also avoids the influence of the liquid leak on a first bus component.

Given that the first battery cell may deform under the action of the pressure, the deformation of the first battery cell may cause damage to the housing and further cause the leakage of the electrolytic solution, or may cause the deformation of the electrode assembly in the interior of the first battery cell to lead to lithium plating, all of which lead to safety issues of the battery. Therefore, by providing the pressure sensor on the second battery cell, the stress states of the plurality of first battery cells squeezing the second battery cell can be detected to discover potential safety hazards in time.

In some embodiments, the pressure sensor is disposed around the second battery cell, so that the pressure sensor disposed around the second battery cell can detect a stress state of each fist battery cell adjacent to the second battery cell, so as to give a warning of potential safety risks due to stress.

In some embodiments, the battery includes a first bus component and a second bus component, and the first bus component is configured to enable an electrical connection between the plurality of first battery cells to form a first power supply circuit; and the second bus component is configured to enable an electrical connection between a plurality of second battery cells to form a second power supply circuit, and the first power supply circuit and the second power supply circuit respectively provide electric energy for different power consumption modules.

Since the sizes of the first battery cell and the second battery cell are usually different, the capacitances of them are also usually set to be different. For example, the capacitance of the first battery cell is usually greater, and the first battery cell can be used to supply power to a power consumption device where the battery is located, that is, the electrical connection between the plurality of first battery cells is enabled through the first bus component to form the first power supply circuit, and the first power supply circuit can be used to output electric energy to the power consumption device where the battery is located.

However, the capacitance of the second battery cell is usually smaller, thus, the electrical connection between the second battery cells can be enabled through the second bus component to form the second power supply circuit, and the second power supply circuit can individually output the electrical energy as a backup power supply. For example, in an example that the battery supplies power to a vehicle, the second power supply circuit may replace a low-voltage system of the vehicle, and in this way, the low-voltage system does not need to additionally occupy space, for example, it does not need to occupy space other than the battery, and only exists in the originally vacant gap between the plurality of first battery cells in the battery, which is beneficial to increasing the system energy density, and can reduce the cost.

In a second aspect, a power consumption device is provided, including: the battery in the first aspect or any embodiment in the first aspect.

In some embodiments, the power consumption device is a vehicle, a ship or a spacecraft.

A third aspect, a method for producing a battery is provided, including: providing a plurality of first battery cells, a first battery cell being a cylinder, and a gap being provided between the plurality of first battery cells; providing a second battery cell, the second battery cell being disposed in the gap between the plurality of first battery cells, and the second battery cell being configured to deform under a squeeze of the plurality of first battery cells to fit a shape of the gap; and providing a box, the box being configured to accommodate the plurality of first battery cells and the second battery cell.

In a fourth aspect, a device for producing a battery is provided, including a module for executing the method in the above third aspect.

### BRIEF DESCRIPTION OF THE DRAWINGS

FIG. 1 is a schematic structural diagram of a vehicle disclosed in an embodiment of present application;
FIG. 2 is a schematic diagram of a partial structure of a battery disclosed in an embodiment of the application;
FIG. 3 is a schematic sectional view of a partial exploded structure of a battery disclosed in an embodiment of the present application;
FIG. 4 is a schematic structural diagram of a first battery cell disclosed in an embodiment of the present application;
FIG. 5 is a schematic diagram of a partial structure of a battery disclosed in an embodiment of the present application;
FIG. 6 is a schematic diagram of a partial structure of another battery disclosed in another embodiment of the present application;
FIG. 7 is a schematic diagram of an exploded structure of any three adjacent first battery cells and a corresponding second battery cell in a battery disclosed in an embodiment of the present application;
FIG. 8 is a schematic structural diagram of any three adjacent first battery cells and a corresponding second battery cell installed in a battery disclosed in an embodiment of the present application;
FIG. 9 is a schematic structural diagram of a second battery cell disclosed in an embodiment of the present application;
FIG. 10 is a schematic flowchart of a method for producing a battery disclosed in an embodiment of the present application; and
FIG. 11 is a schematic block diagram of a device for producing a battery disclosed in an embodiment of the present application.

In the accompanying drawings, the accompanying drawings are not drawn to actual scale.

### DESCRIPTION OF EMBODIMENTS

Implementation manners of the present application will be further described below in detail with reference to the accompanying drawings and embodiments. The detailed description of the following embodiments and the accompanying drawings are used to exemplarily illustrate principles of the present application, but cannot be used to limit the scope of the present application, that is, the present application is not limited to the described embodiments.

In the description of the present application, it should be noted that, unless otherwise illustrated, "a plurality of" means two or more; and orientations or positional relationships indicated by terms such as "up", "down", "left", "right", "inside", and "outside" are merely for convenience of describing the present application and for simplifying the description, rather than for indicating or implying that an apparatus or element indicated must have a specific orientation, and must be constructed and operated in a specific orientation, which thus shall not be understood as limitation to the present application. In addition, the terms such as "first", "second", and "third" are merely intended for the purpose of description, and shall not be understood as an indication or implication of relative importance. "Vertical" is not strictly vertical, but within an allowable range of error. "Parallel" is not strictly parallel, but within an allowable range of error.

The terms representing orientations in the following description are all directions shown in the drawings, and do not limit the specific structure of the present application. In the description of the present application, it should be further noted that, unless explicitly specified and defined otherwise, terms "installation", "interconnection" and "connection" should be understood in a broad sense; for example, they may be either a fixed connection, or a detachable connection, or an integrated connection; and they may be either a direct connection, or an indirect connection through an intermediate medium. Those of ordinary skill in the art may appreciate the specific meanings of the foregoing terms in the present application according to specific conditions.

In the embodiments of the present application, the same reference signs represent the same components, and detailed description of the same components is omitted in different embodiments for brevity. It should be understood that dimensions such as thickness, length and width of various components in the embodiments of the present application shown in the drawings, as well as dimensions of the overall thickness, length and width of an integrated apparatus are merely illustrative, and should not constitute any limitation to the present application.

In the present application, a battery cell may include a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell may be cylindrical, flat, cuboid or in another shape, which is also not limited in the embodiments of the present application. The battery cell is generally divided into three types according to the way of packaging: a cylindrical battery cell, a prismatic battery cell and a pouch battery cell, which is also not limited in the embodiments of the present application.

The battery mentioned in the embodiments of the present application refers to a single physical module including one or more battery cells to provide a higher voltage and capacity. For example, the battery mentioned in the present application may include a battery module, a battery pack, or the like. The battery generally includes a box for packaging one or more battery cells. The box may avoid liquid or other foreign matters to affect charging or discharging of the battery cell.

The battery cell includes an electrode assembly and an electrolytic solution, and the electrode assembly is composed of a positive electrode sheet, a negative electrode sheet and a separator. The operation of the battery cell mainly relies on movement of metal ions between the positive electrode sheet and the negative electrode sheet. The positive electrode sheet includes a positive electrode current collector and a positive active material layer. The positive active material layer is coated on a surface of the positive electrode current collector, and the positive electrode current collector not coated with the positive active material layer protrudes from the positive electrode current collector coated with the positive active material layer, and the positive electrode current collector not coated with the positive active material layer serves as a positive tab. In an example of a lithium-ion battery, the material of the positive electrode current collector may be aluminum, and the positive active material may be lithium cobalt oxides, lithium iron phosphate, ternary lithium, lithium manganate, or the like. The negative electrode sheet includes a negative electrode current collector and a negative active material layer. The negative active material layer is coated on a surface of the negative electrode current collector, the negative electrode current collector not coated with the negative active material layer protrudes from the negative electrode current collector coated with the negative active material layer, and the negative electrode current collector not coated with the negative active material layer serves as a negative tab. The material of the negative electrode current collector may be copper, and the negative active material may be carbon, silicon, or the like. In order to ensure that no fusing occurs when a large current passes, there are a plurality of positive tabs which are stacked together, and there are a plurality of negative tabs which are stacked together. The material of the separator may be polypropylene (PP) or polyethylene (PE), or the like. In addition, the electrode assembly may be a winding structure or a laminated structure, and the embodiments of the present application are not limited thereto.

With the development of the battery technology, it is necessary to consider design factors in multiple aspects simultaneously, for example, performance parameters, such as energy density, cycle life, discharge capacity, and C-rate, and safety of the battery. Given that power consumption devices such as electric vehicles usually require high voltage and high capacity to meet cruising ability and high current output, this type of power consumption devices is limited by volume, and the space occupied by the battery is also limited, so how to increase energy density of the battery as much as possible in a limited space has become an important issue.

For example, for cylindrical battery cells, due to characteristics of the shape of a cylinder, there is a gap between adjacent battery cells after grouping, which cannot achieve the same wall-to-wall intimate contact as rectangular battery cells. This leads to relatively low energy density of a battery composed of the cylindrical battery cells, and greatly weakens the market competitiveness of the cylindrical battery cells.

Therefore, an embodiment of the present application provides a battery. The battery includes a box, the box accommodates a plurality of first battery cells in a cylindrical shape, and there is a gap between the plurality of first battery cells. The battery further includes a second battery cell, the second battery cell is disposed in the gap between the plurality of first battery cells, and the second battery cell can deform under a squeeze of the plurality of first battery cells to fit the gap between the plurality of first battery cells. The gap between the plurality of first battery cells in a cylindrical shape can be fully utilized, which improves utilization of the space in the box, thereby increasing energy density of the battery.

Moreover, during the use of the battery, the plurality of first battery cells come into contact with each other and may collide, resulting in deformation of the first battery cells; the battery may expand in the charging and discharging process, which may cause the plurality of first battery cells in contact with each other to be squeezed and deformed; and when used in scenarios such as a vehicle, the battery may be subjected to an external force to cause the plurality of first battery cells to collide, resulting in deformation of the first battery cells. However, the deformation of the first battery cells may cause damage to a housing to further cause a leakage of an electrolytic solution, or may cause deformation of an electrode assembly in an interior of the first battery cell to lead to lithium plating, all of which lead to safety issues of the battery. Therefore, by providing the deformable second battery cell in the gap between the plurality of first battery cells, the squeeze between the plurality of first battery cells can be effectively reduced, thereby reducing the deformation of the first battery cells, improving the stability between the plurality of first battery cells, and further improving the safety of the battery. That is, the battery in the embodiment of the present application can greatly increase system energy density of a cylindrical battery and improve market competitiveness thereof, and could effectively reduce the failure of the battery.

The technical solutions described in the embodiments of the present application are all applicable to various power consumption devices using batteries.

The power consumption device may be a vehicle, a mobile phone, a portable device, a notebook computer, a ship, a spacecraft, an electric toy, an electric tool, and the like. The vehicle may be a fuel-powered vehicle, a gas-powered vehicle or a new energy vehicle, and the new energy vehicle may be a battery electric vehicle, a hybrid vehicle, an extended-range vehicle, or the like; the spacecraft includes an airplane, a rocket, a space shuttle, a spaceship, and the like; the electric toy includes a fixed or mobile electric toy, such as a game console, an electric vehicle toy, an electric ship toy, and an electric airplane toy; and the electric tool includes an electric metal cutting tool, an electric grinding tool, an electric assembling tool and an electric railway tool, such as an electric drill, an electric grinder, an electric spanner, an electric screwdriver, an electric hammer, an electric impact drill, an concrete vibrator and an electric planer. The above power consumption device is not specially limited in the embodiments of the present application.

For convenience of description, the following embodiments will be explained by an example that the power consumption device is a vehicle.

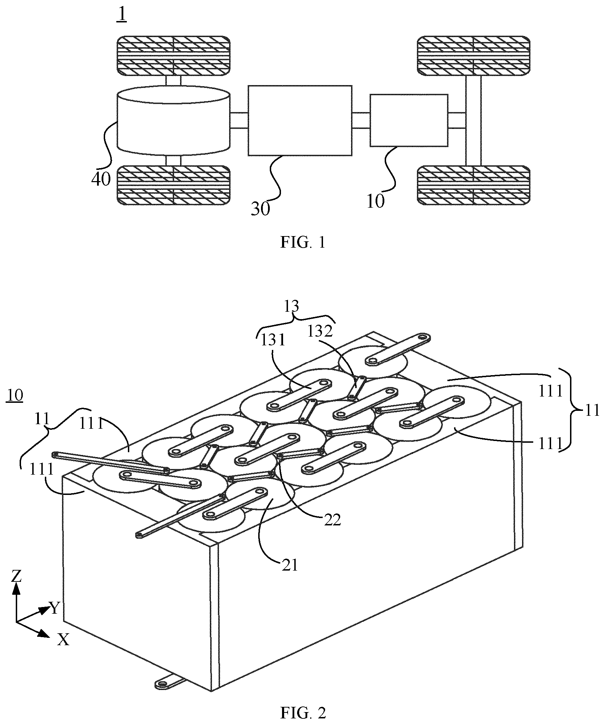

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. The vehicle 1 may be internally provided with a motor 40, a controller 30 and a battery 10, and the controller 30 is configured to control the battery 10 to supply power to the motor 40. For example, the battery 10 may be disposed at the bottom, head or tail of the vehicle 1. The battery 10 may be configured to supply power to the vehicle 1. For example, the battery 10 may be used as an operation power supply of the vehicle 1 for a circuit system of the vehicle 1, for example, for a working power demand of the vehicle 1 during startup, navigation and running. In another embodiment of the present application, the battery 10 may be used not only as an operation power supply of the vehicle 1, but also as a driving power supply of the vehicle 1, replacing or partially replacing fuel or natural gas to provide driving power for the vehicle 1.

In order to meet different power usage demands, the battery may include a plurality of battery cells, where the plurality of battery cells may be in series connection, parallel connection or series-parallel connection. The series-parallel connection refers to a combination of series connection and parallel connection. The battery may also be referred to as a battery pack. In some embodiments, the plurality of battery cells may be in series connection, parallel connection or series-parallel connection first to form a battery module, and then a plurality of battery modules are in series connection, parallel connection or series-parallel connection to form a battery. That is, a plurality of battery cells may directly form a battery, or may first form a battery module, and then battery modules form a battery.

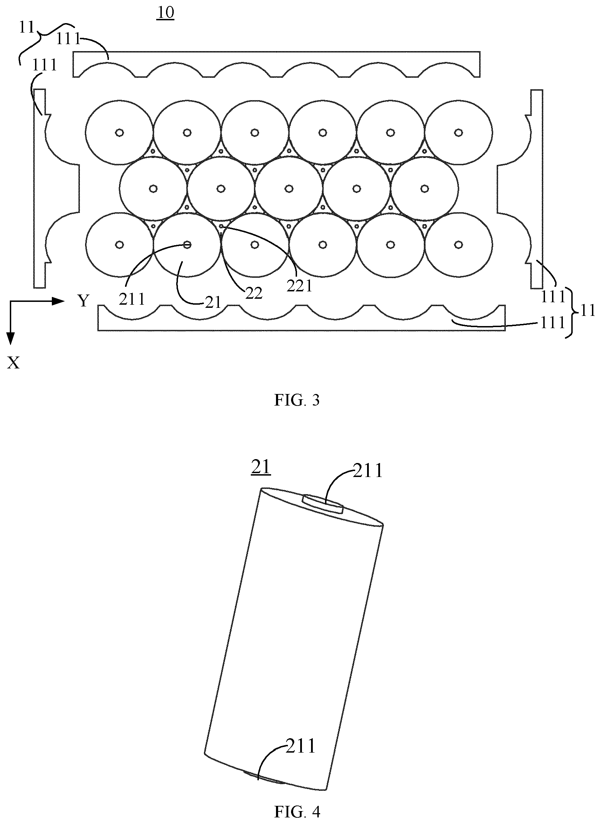

FIG. 2 shows a schematic diagram of a partial structure of a battery 10 according to an embodiment of the present application, and FIG. 3 shows a schematic sectional view of a partial exploded structure of a battery 10 according to an embodiment of the present application, where a part of the battery 10 in FIG. 2 can be formed after assembling the battery 10 in FIG. 3. As shown in FIG. 2 and FIG. 3, the battery 10 in the embodiments of the present application includes: a plurality of first battery cells 21, a first battery cell 21 being a cylinder, and a gap being provided between the plurality of first battery cells 21; a second battery cell 22 disposed in the gap between the plurality of first battery cells 21, the second battery cell 22 being configured to deform under a squeeze of the plurality of first battery cells 21 to fit a shape of the gap; and a box 11 configured to accommodate the plurality of first battery cells 21 and the second battery cell 22.

It should be understood that the section of the battery 10 shown in FIG. 3 is a section in a direction perpendicular to an axial direction Z of the first battery cell 21.

The battery 10 in the embodiments of the present application includes a plurality of first battery cells 21. Since the plurality of first battery cells 21 are cylinders, and side surfaces of the cylinders are curved surfaces, there is a gap between side walls of the plurality of first battery cells 21. The second battery cell 22 in the embodiments of the present application can deform, and in this way, by disposing the second battery cell 22 in the gap between the plurality of first battery cells 21, the second battery cell 22 can deform under the squeeze of the plurality of first battery cells 21 to fit the gap between the plurality of first battery cells 21. The gap between the plurality of first battery cells 21 in a cylindrical shape can be fully utilized, which improves utilization of the space in the box 11 of the battery 10, thereby increasing energy density of the battery 10.

Moreover, during the use of the battery 10, if the plurality of first battery cells 21 come into contact with each other, they may collide, resulting in deformation of the first battery cells 21; the battery 10 may expand in the charging and discharging process, which may cause the plurality of first battery cells 21 in contact with each other to be squeezed and deformed; and when used in scenarios such as a vehicle, the battery 10 may be subjected to an external force to cause the plurality of first battery cells 21 to collide, resulting in deformation of the first battery cells 21. However, the deformation of the first battery cells 21 may cause damage to a housing to further cause a leakage of an electrolytic solution, or may cause deformation of an electrode assembly in an interior of the first battery cell 21 to lead to lithium plating, all of which lead to safety issues of the battery 10. Therefore, by providing the deformable second battery cell 22 in the gap between the plurality of first battery cells 21, the squeeze between the plurality of first battery cells 21 can be effectively reduced, thereby reducing the deformation of the first battery cells 21, improving the stability between the plurality of first battery cells 21, and further improving the safety of the battery 10. Therefore, the battery 10 in the embodiments of the present application can greatly increase system energy density of the battery 10 including the cylindrical battery cells and improve market competitiveness thereof, and could effectively reduce the failure of the battery 10.

The battery 10 in the embodiments of the present application includes the box 11, an interior of the box 11 is a hollow structure, and all the plurality of first battery cells 21 and the second battery cell 22 are accommodated in the box 11. FIG. 2 and FIG. 3 show a possible implementation manner of the box 11 according to the embodiments of the present application. As shown in FIG. 2 and FIG. 3, the body 11 in the embodiments of the present application may be formed by combining multiple parts. For example, the box 11 may include four side walls 111, the four side walls 111 are respectively parallel to the axial direction Z of the first battery cell 21, so as to enclose the plurality of first battery cells 21 and the second battery cell 22. Optionally, an inner surface of each side wall 111 toward the interior may be provided with a concave-convex profiling structure, and the profiling structure may be in contact with curved side walls of the plurality of first battery cells 21 to fill the gaps between the side wall 111 and the first battery cells 21, so that the first battery cells 21 are relatively stable, and the stability of the battery 10 is improved.

Optionally, the box 11 may further include two end plates, and the two end plates are perpendicular to the four side walls 111, and are respectively disposed at both ends of the four side walls 111 in the axial direction Z to form a hollow cuboid with the four side walls 111, so that the box 11 is relatively sealed. Alternatively, the battery 10 may further include another component, and the another component serves as at least one of the two end plates to form the hollow box 11 with the four side walls 111. For example, the battery 10 may include a thermal management component, and the thermal management component is disposed at one end or both ends of the first battery cell 21 in the axial direction Z to serve as an end plate, but the embodiments of the present application are not limited thereto.

Optionally, the box 11 in the embodiments of the present application may be formed by other means. For example, the box 11 may include two portions, which are referred to as a first portion and a second portion respectively, and the first portion and the second portion are fastened together. Shapes of the first portion and the second portion may be determined according to the shape of the inner first battery cell 21, and at least one of the first portion and the second portion has an opening.

For example, only one of the first portion and the second portion may be a hollow cuboid with an opening, and the other is in a plate shape to cover the opening. For example, here, in an example that the second portion is a hollow cuboid and has only one surface with an opening and the first portion is in a plate shape, then the opening of the second portion is covered by the first portion 111 to form a box 11 with a closed chamber, the chamber may be configured to accommodate a plurality of battery cells, the plurality of battery cells include the first battery cell 21 and the second battery cell 22, and the plurality of battery cells are combined in parallel connection or series connection or series-parallel connection and then placed in the box 11 formed after the first portion and the second portion are fastened.

For another example, the first portion and the second portion each may be a hollow cuboid and each of them has only one surface with an opening, the opening of the first portion is disposed opposite to the opening of the second portion, and the first portion and the second portion are fastened to each other to form a box 11 with a closed chamber.

It should be understood that the first battery cell 21 in the embodiments of the present application may further include a first electrode terminal 211, and the first electrode terminal 211 may be configured to electrically connect to the electrode assembly in the interior of the first battery cell 21 to output electrical energy. Similarly, the second battery cell 22 may further include a second electrode terminal 221, and the second electrode terminal 221 may be configured to electrically connect to an electrode assembly in the interior of the second battery cell 22 to output electrical energy.

Specifically, FIG. 4 shows a schematic structural diagram of a first battery cell 21 according to an embodiment of the present application. As shown in FIG. 2 to FIG. 4, the first battery cell 21 may include two first electrode terminals 211, and similarly, the second battery cell 22 may also include two second electrode terminals 221. The following will be described here by an example of two electrode terminals included in any battery cell. The two electrode terminals are a positive electrode terminal and a negative electrode terminal respectively, the positive electrode terminal is configured to electrically connect to a positive tab, and the negative electrode terminal is configured to electrically connect to a negative tab. The positive electrode terminal and the positive tab may be connected directly or indirectly, and the negative electrode terminal and the negative tab may be connected directly or indirectly. For example, the positive electrode terminal is connected to the positive tab through a connecting member, and the negative electrode terminal is connected to the negative tab through a connecting member.

Optionally, as shown in FIG. 2 to FIG. 4, the two electrode terminals in the embodiments of the present application may be respectively disposed on two cylindrical bottom surfaces of the battery cell, that is, two cylindrical bottom surfaces of the first battery cell 21 are respectively provided with the first electrode terminals 211, and similarly, two cylindrical bottom surfaces of the second battery cell 22 are respectively provided with the second electrode terminals 221, so as to achieve the electrical connection between the plurality of battery cells.

It should be understood that the battery 10 in the embodiments of the present application may further include a bus component 13, and the bus component 13 is configured to enable the electrical connection between the plurality of battery cells, for example in parallel connection, series connection or series-parallel connection. Specifically, as shown in FIG. 2, the bus component 13 may enable the electrical connection between the battery cells by connecting the electrode terminals of the battery cells. Further, the bus component 13 may be fixed to the electrode terminals of the battery cells by means of welding.

Optionally, in order to clearly show the position of the electrode terminal 211 in the embodiments of the present application, FIG. 3 does not show the bus component 13 in FIG. 2. As shown in FIG. 2 to FIG. 4, for the first battery cell 21 in a cylindrical shape in the embodiments of the present application, two cylindrical bottom surfaces of the first battery cell 21 are respectively provided with the first electrode terminals 211, and in this way, the electrical connection between the plurality of first battery cells 21 and/or between the first battery cell 21 and another battery cell can be achieved through first bus components 131 respectively disposed at both ends of the plurality of first battery cells 21, so as to facilitate assembly and electrical connection. Similarly, for the second battery cell 22 located between the first battery cells 21 in the embodiments of the present application, two bottom surfaces of the second battery cell 22 are respectively provided with the second electrode terminals 211, and in this way, the electrical connection between a plurality of second battery cells 22 and/or between the second battery cell 22 and another battery cell can be achieved through second bus components 132 respectively disposed at both ends of the plurality of second battery cells 22, so as to facilitate assembly and electrical connection.

In the embodiments of the present application, the first bus component 131 and the second bus component 132 included in the battery 10 may be the same or different bus components 13. For example, in a case that the first bus component 131 and the second bus component 132 are different, the first bus component 131 is configured to enable electrical connection between the plurality of first battery cells 21 to form a first power supply circuit; and the second bus component 132 is configured to enable electrical connection between a plurality of second battery cells 22 to form a second power supply circuit, and the first power supply circuit and the second power supply circuit respectively provide electric energy for different power consumption modules. Since the sizes of the first battery cell 21 and the second battery cell 22 are usually different, the capacitances of them are also usually set to be different. For example, the capacitance of the first battery cell 21 is usually greater, and the first battery cell 21 can be used to supply power to a power consumption device where the battery 10 is located, that is, the electrical connection between the plurality of first battery cells 21 is enabled through the first bus component 131 to form the first power supply circuit, and the first power supply circuit can be used to output electric energy to the power consumption device where the battery 10 is located.

However, the capacitance of the second battery 22 is usually smaller, thus, the electrical connection between the second battery cells 22 can be enabled through the second bus component 132 to form the second power supply circuit, and the second power supply circuit can individually output the electrical energy as a backup power supply. For example, in an example that the battery 10 supplies power to the vehicle 1, the second power supply circuit may replace a low-voltage system of the vehicle 1, and in this way, the low-voltage system does not need to additionally occupy space, for example, it does not need to occupy space other than the battery 10, and only exists in the originally vacant gap between the plurality of first battery cells 21 in the battery 10, which is beneficial to increasing the system energy density, and can reduce the cost.

It should be understood that the battery cells in the interior of the box 11 in the embodiments of the present application may be arranged and disposed according to a certain rule, especially the plurality of first battery cells 21, so as to improve the space utilization of the box 11, thereby increasing the energy density of the battery 10. For example, the sizes of the plurality of first battery cells 21 in the embodiments of the present application may be set to be the same or different. The embodiments of the present application will be described by an example that the sizes of the plurality of first battery cells 21 are the same, that is, the diameters of the bottom surfaces of the plurality of first battery cells 21 are the same, and the heights of the plurality of first battery cells 21 are also the same, so that the capacities of the plurality of first battery cells 21 are also the same, so as to realize the electrical connection between the plurality of first battery cells 21 and facilitate the arrangement of the plurality of first battery cells 21, improving the space utilization.

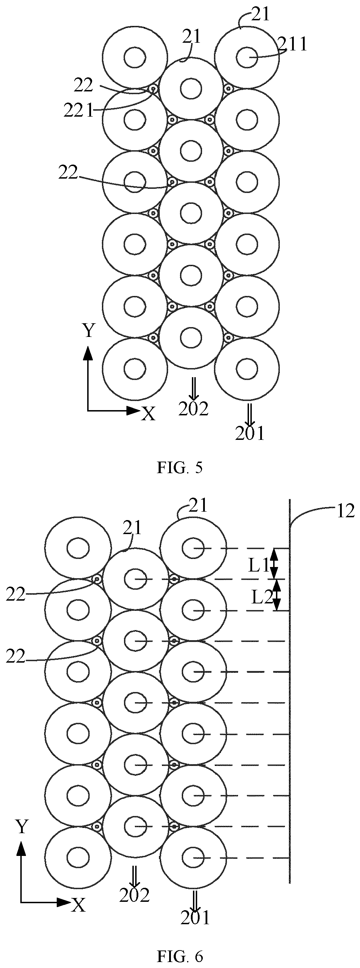

Specifically, FIG. 5 shows a schematic diagram of a partial section of a battery 10 according to an embodiment of the present application. The battery 10 may be the battery 10 shown in FIG. 2 and FIG. 3, and the section may be a plane perpendicular to the axis direction Z of the first battery cell 21. As shown in FIG. 5, the battery 10 includes: a plurality of battery cell groups arranged in a first direction X, each of the plurality of battery cell groups including a plurality of first battery cells 21 arranged in a second direction Y, and the first direction X, the second direction Y and the axial direction Y of the first battery cell 21 being perpendicular to each other. By arranging the plurality of first battery cells 21 in an array, the space in the interior of the box 11 can be effectively utilized.

Correspondingly, a plurality of second battery cells 22 are respectively disposed in multiple gaps between two adjacent battery cell groups of the plurality of battery cell groups. Specifically, as shown in FIG. 5, there are multiple gaps between the plurality of battery cell groups, and the plurality of second battery cells 22 may be disposed in the multiple gaps, for example, the plurality of second battery cells 22 may be disposed in all or some of the gaps, but the embodiments of the present application are not limited thereto.

For example, as shown in FIG. 5, in an example of any two adjacent battery cell groups of the plurality of battery cell groups, which are respectively referred to as a first battery cell group 201 and a second battery cell group 202 here, there are multiple gaps between the first battery cell group 201 and the second battery cell group 202, a plurality of second battery cells 22 are provided correspondingly, and each second battery cell 22 is disposed in a gap. As shown in FIG. 5, the plurality of second battery cells 22 of the battery 10 may be disposed in all the gaps, that is, the plurality of second battery cells 22 are in one-to-one correspondence to the multiple gaps, so that the second battery cells 22 are disposed in all the gaps between every two adjacent second battery groups, and the space utilization of the battery 10 reaches the maximum value to make full use of all the gaps between the first battery cells 21 in the battery 10.

For another example, different from FIG. 5, FIG. 6 shows a schematic diagram of a partial section of another battery 10 according to an embodiment of the present application. The section may be a plane perpendicular to the axial direction Z of the first battery cell 21. As shown in FIG. 6, the plurality of second battery cells 22 may be disposed only in some of the gaps, that is, the second battery cells 22 are disposed only in a part of the gaps between the first battery cell group 201 and the second battery cell group 202, which could reduce the quantity of second battery cells 22 provided and reduce the cost.

Given the characteristics of a cylinder, the plurality of battery cell groups may be arranged in dislocation to reduce the gaps between the plurality of first battery cells 21 and improve the space utilization. Specifically, orthographic projections of axes of all the first battery cells 21 in the two adjacent battery cell groups on a first plane 12 do not coincide, and the first plane 12 is perpendicular to the first direction X. In this way, the first battery cells 21 in the two adjacent battery cell groups are arranged in a staggered manner, so that the space between curved surfaces could be fully utilized.

For example, the orthographic projections of the axes of all the first battery cells 21 in the two adjacent battery cell groups on the first plane 12 are evenly distributed. As shown in FIG. 6, in an example of the first battery cell group 201 and the second battery cell group 202 here, all the first battery cells 21 included in the first battery cell group 201 and the second battery cell group 202 have the same size, and in this case, the distances between the projections of the axes of all the first battery cells 21 included in the two battery cell groups on the first plane 12 may be set to be equal. For example, as shown in FIG. 6, the distance between the axis of the first battery cell 21 in the first battery cell group 201 and the axis of the first battery cell 21 in the second battery cell group 202 is L1; and the distance between the axis of the first battery cell 21 in the second battery cell group 202 and the axis of the second first battery cell 21 in the first battery cell group 201 is L2, the distance L1 is equal to the distance L2, and so on. The distances between the projections of the axes of all the first battery cells 21 included in the first battery cell group 201 and the second battery cell group 202 on the first plane 12 are equal to L1. In this way, the first battery cells 21 in different battery cell groups may be arranged in dislocation, so that the space is properly utilized, the gap between the plurality of first battery cells 21 is reduced, and the space utilization of the plurality of first battery cells 21 in the battery 10 is improved.

In the embodiment of the present application, the second battery cell 22 is located in a gap formed by three adjacent first battery cells 21 in the two adjacent battery cell groups. Specifically, as shown in FIG. 6, when the first battery cells 21 of the plurality of battery cell groups are arranged in dislocation, every three first battery cells 21 may form a relatively independent gap, and correspondingly, the second battery cell 22 may be disposed in the gap formed by the three first battery cells 21, so as to further improve the space utilization of the battery 10.

As shown in FIG. 6, sections of the three adjacent first battery cells 21 along a second plane are three circles, every two of the three circles are circumscribed circles of each other, and the second plane is perpendicular to the axial direction Z of the first battery cell 21. In this way, regardless of the plurality of second battery cells 22 disposed in the battery 10, the space utilization of the plurality of first battery cells 21 in the battery 10 can be greatly improved to make full use of the limited space of the box 11 of the battery 10; and further, by providing the second battery cell 22 in the gap between the plurality of battery cells 22, the gap between the first battery cells 21 can be fully utilized, and the energy density of the battery 10 is further increased. Moreover, since the second battery cell 22 is disposed in the gap between the three first battery cells 21, when the plurality of first battery cells 21 originally tangential to each other are subjected to an external pressure or expand to generate a pressure, the second battery cell 22 can relieve the pressure and reduce the deformation of the first battery cells 21 due to the action of the pressure, so that the three first battery cells 21 are kept tangential to each other as much as possible to avoid the issues such as the leakage of the electrolytic solution or lithium plating caused by the deformation of the first battery cells 21, improving the safety performance of the battery 10.

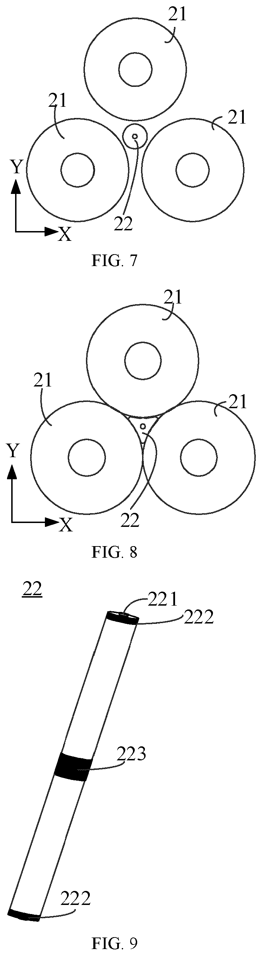

FIG. 7 shows a schematic diagram of an exploded structure of any three adjacent first battery cells 21 and a corresponding second battery cell 22 in a battery 10 according to an embodiment of the present application, where FIG. 7 may be three adjacent first battery cells 21 and a corresponding second battery cell 22 in any battery 10 in FIG. 2 to FIG. 3 and FIG. 5 to FIG. 6, and FIG. 8 is a schematic diagram of the three first battery cells 21 and the corresponding second battery cell 22 disposed in the battery 10 shown in FIG. 7. As shown in FIG. 7, the second battery cell 22 may be configured as a cylinder when it is not squeezed. Since the side surface of the second battery cell 22 in a cylindrical shape is a curved surface, the shape of which is more rounded than other shapes. In this way, as shown in FIG. 8, in the case of being squeezed, especially when the sections of the three adjacent first battery cells 21 along the second plane are three circumscribed circles of each other, the deformation of the second battery cell 22 located in the gap is more flexible, and the approximately triangular space between the plurality of first battery cells 21 can be fully utilized to improve the space utilization and the energy density of the battery 10.

Specifically, as shown in FIG. 8, the size and the amount of the deformation the second battery cell 22 in the embodiment of the present application may be set according to actual applications. Specifically, if the diameter of the first battery cell 21 is relatively great, the gap between the plurality of first battery cells 21 is relatively small, and correspondingly, the second battery cell 22 with a smaller diameter may be selected, that is, the difference between the diameter of the first battery cell 21 and the diameter of the second battery cell 22 is relatively great, so that the space utilization of the battery 10 is high. On the contrary, if the diameter of the first battery cell 21 is relatively small, the gap between the plurality of first battery cells 21 is relatively great, and correspondingly, the second battery cell 22 with a greater diameter is selected, that is, the difference between the diameter of the first battery cell 21 and the diameter of the second battery cell 22 is relatively small. In this case, the space utilization of the battery 10 is also high, but the occupancy of the first battery cells 21 in the battery 10 is small.

In the embodiment of the present application, for the gaps with the same size, if the diameter of the second battery cell 22 is relatively great, and the squeeze the second battery cell 22 is subjected to is also relatively great. In this case, a material with a great amount of deformation can be selected for the second battery cell 22, so that the second battery cell 22 can be deformed to fit the gap without affecting the arrangement between the first battery cells 21. On the contrary, if the diameter of the second battery cell 22 is relatively small, and the squeeze the second battery cell 22 is subjected to is also relatively small. Therefore, a material with a small amount of deformation can be selected for the second battery cell 22, so that it can fit the gap between the plurality of first battery cells 21 without affecting the arrangement between the first battery cells 21.

The second battery cell 22 is provided with a pressure sensor 223, and the pressure sensor 223 is configured to detect stress states of the plurality of first battery cells 21 squeezing the second battery cell 22. FIG. 9 shows a schematic structural diagram of a second battery cell 22 according to an embodiment of the present application. As shown in FIG. 9, given that the first battery cell 21 may deform under the action of the pressure, the deformation of the first battery cell 21 may cause damage to the housing and further cause the leakage of the electrolytic solution, or may cause the deformation of the electrode assembly in the interior of the first battery cell 21 to lead to lithium plating, all of which lead to safety issues of the battery 10. Therefore, by providing the pressure sensor on the second battery cell 22, the stress states of the plurality of first battery cells 21 squeezing the second battery cell 22 can be detected.

Optionally, as shown in FIG. 9, the pressure sensor 223 is disposed around the second battery cell 11, so that the pressure sensor 223 disposed around the second battery cell 22 can detect a stress state of each fist battery cell 21 adjacent to the second battery cell 22, so as to give a warning of potential safety risks due to stress.

Optionally, the second battery cell 22 is provided with a liquid leak sensor 222, and the liquid leak sensor 222 is configured to detect whether the first battery cell 21 and/or the second battery cell 22 leaks liquid. As shown in FIG. 9, given that the interior of the first battery cell 21 and/or the second battery cell 22 is provided with an electrolytic solution, if the electrolytic solution leaks, it may cause a short circuit of the circuit connection in the battery 10. Therefore, the liquid leak sensor 222 provided can be configured to detect whether the first battery cell 21 and/or the second battery cell 22 leaks the electrolytic solution, so as to avoid a short circuit in the battery 10.

In addition, given that the interior of the battery 10 may be further provided with a thermal management component, the thermal management component may accommodate a fluid to regulate a temperature of the battery cells in the battery 10. The fluid here may be liquid or gas, and the temperature regulation means heating or cooling the plurality of battery cells. In a case of cooling or lowering the temperature of the battery cells, the thermal management component is configured to accommodate a cooling fluid to lower the temperature of the plurality of battery cells; in addition, the thermal management component may also be configured for heating to raise the temperature of the plurality of battery cells, which is not limited in the embodiments of the present application. Optionally, the above fluid may flow in a circulating manner to achieve a better temperature regulation effect. Optionally, the fluid may be water, a mixture of water and ethylene glycol, air, or the like.

If the thermal management component leaks, the outflowing liquid may also cause a short circuit of the circuit connection in the battery 10. Therefore, the liquid leak sensor 222 may also be configured to detect whether the leakage of the above fluid occurs in the battery 10, so as to avoid a short circuit in the battery 10.

Optionally, the liquid leak sensor 222 of the second battery cell 22 is disposed at one end of the second battery cell 22 close to a first electrode terminal 211 of the first battery cell 21. In this way, the liquid leak sensor 222 can detect whether there is a liquid leak near the first electrode terminal 211 of the first battery cell 21 in time, which avoids the short circuit of the electrical connection between the first electrode terminal 211 and another component caused by the liquid leak, and also avoids the influence of the liquid leak on a first bus component 131. In addition, since the position of the second electrode terminal 221 of the second battery cell 22 corresponds to the first electrode terminal 211, the liquid leak sensor 222 can also detect whether there is a liquid leak near the second electrode terminal 221 in time, which avoids the short circuit of the electrical connection between the second electrode terminal 221 and another component caused by the liquid leak, and also avoids the influence of the liquid leak on a second bus component 132.

Optionally, given that each battery cell is provided with two electrode terminals, correspondingly, the second battery cell 22 may be provided with two liquid leak sensors 222 respectively located at both ends of the second battery cell 22 to respectively detect the liquid leak near the first electrode terminal 211 and/or the second electrode terminal 221 in time, so as to avoid a short circuit and improve the safety of the battery 10.

The battery 10 and the power consumption device according to the embodiments of the present application are described above. A method and device for producing a battery 10 according to the embodiments of the present application will be described below, and for the parts that are not described in detail, reference is made to the foregoing embodiments.

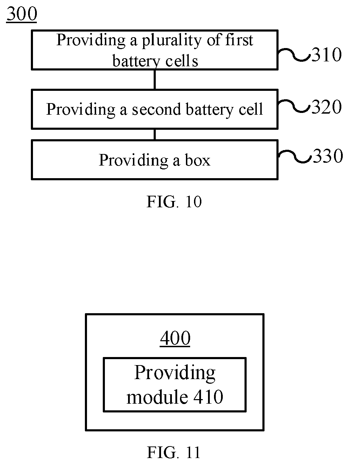

FIG. 10 shows a schematic flowchart of a method 300 for producing a battery according to an embodiment of the present application. As shown in FIG. 10, the method 300 may include: S310, providing a plurality of first battery cells 21, a first battery cell 21 being a cylinder, and a gap being provided between the plurality of first battery cells 21; S320, providing a second battery cell 22, the second battery cell 22 being disposed in the gap between the plurality of first battery cells 21, and the second battery cell 22 being configured to deform under a squeeze of the plurality of first battery cells 21 to fit a shape of the gap; and S330, providing a box 11, the box 11 being configured to accommodate the plurality of first battery cells 21 and the second battery cell 22.

FIG. 11 shows a schematic block diagram of a device 400 for producing a battery according to an embodiment of the present application. As shown in FIG. 11, the device 400 may include: a providing module 410, the providing module 410 being configured to: provide a plurality of first battery cells 21, a first battery cell 21 being a cylinder, and a gap being provided between the plurality of first battery cells 21; provide a second battery cell 22, the second battery cell 22 being disposed in the gap between the plurality of first battery cells 21, and the second battery cell 22 being configured to deform under a squeeze of the plurality of first battery cells 21 to fit a shape of the gap; and provide a box 11, the box 11 being configured to accommodate the plurality of first battery cells 21 and the second battery cell 22.

Although the present application has been described with reference to the preferred embodiments thereof, various modifications can be made thereto without departing from the scope of the present application, and the components therein can be replaced with equivalents. In particular, as long as there is no structural conflict, various technical features mentioned in the various embodiments may be combined in any manner. The present application is not limited to the specific embodiments disclosed herein, and includes all technical solutions falling within the scope of the claims.

## Claims

1. A battery, comprising:
a plurality of first battery cells (21), a first battery cell (21) being a cylinder, and a gap being provided between the plurality of first battery cells (21);
a second battery cell (22) disposed in the gap between the plurality of first battery cells (21), the second battery cell (22) being configured to deform under a squeeze of the plurality of first battery cells (21) to fit a shape of the gap; and
a box (11) configured to accommodate the plurality of first battery cells (21) and the second battery cell (22),
wherein the second battery cell (22) is provided with a pressure sensor (223), and the pressure sensor (223) is configured to detect stress states of a plurality of first battery cells (21) squeezing the second battery cell (22).

2. The battery according to claim 1, wherein the battery comprises:
a plurality of battery cell groups arranged in a first direction, each of the plurality of battery cell groups comprising a plurality of first battery cells (21) arranged in a second direction, the first direction, the second direction and an axial direction of the first battery cell (21) being perpendicular to each other, and a plurality of second battery cells (22) being respectively disposed in a plurality of gaps between two adj acent battery cell groups of the plurality of battery cell groups.

3. The battery according to claim 2, wherein orthographic projections of axes of all first battery cells (21) in the two adjacent battery cell groups on a first plane (12) do not coincide, and the first plane (12) is perpendicular to the first direction.

4. The battery according to claim 3, wherein the orthographic projections of the axes of all first battery cells (21) in the two adjacent battery cell groups on the first plane (12) are evenly distributed.

5. The battery according to claim 3 or 4, wherein the second battery cell (22) is located in a gap formed by three adjacent first battery cells (21) in the two adjacent battery cell groups.

6. The battery according to claim 5, wherein sections of the three adjacent first battery cells (21) along a second plane are three circles, every two of the three circles are circumscribed circles of each other, and the second plane is perpendicular to the axial direction of the first battery cell (21).

7. The battery according to any one of claims 1 to 6, wherein the second battery cell (22) is provided with a liquid leak sensor (222), and the liquid leak sensor (222) is configured to detect whether the first battery cell (21) and/or the second battery cell (22) leaks liquid.

8. The battery according to claim 7, wherein the liquid leak sensor (222) is disposed at one end of the second battery cell (22) close to a first electrode terminal (211) of the first battery cell (21).

9. The battery according to claim 1, wherein the pressure sensor (223) is disposed around the second battery cell (22).

10. The battery according to any one of claims 1 to 9, wherein the battery comprises a first bus component (131) and a second bus component (132), and
the first bus component (131) is configured to enable an electrical connection between a plurality of first battery cells (21) to form a first power supply circuit; and
the second bus component (132) is configured to enable an electrical connection between a plurality of second battery cells (22) to form a second power supply circuit, and the first power supply circuit and the second power supply circuit respectively provide electric energy for different power consumption modules.

11. A power consumption device, comprising: the battery according to any one of claims 1 to 10, the battery being configured to provide electric energy for the power consumption device.

12. A method for producing a battery, comprising:
providing a plurality of first battery cells (21), a first battery cell (21) being a cylinder, and a gap being provided between the plurality of first battery cells (21);
providing a second battery cell (22), the second battery cell (22) being disposed in the gap between the plurality of first battery cells (21), and the second battery cell (22) being configured to deform under a squeeze of the plurality of first battery cells (21) to fit a shape of the gap; and
providing a box (11), the box (11) being configured to accommodate the plurality of first battery cells (21) and the second battery cell (22)
providing a pressure sensor (223), and the pressure sensor (223) is configured to detect stress states of a plurality of first battery cells (21) squeezing the second battery cell (22).

13. A device for producing a battery, comprising: a providing module (410), the providing module (410) being configured to:
provide a plurality of first battery cells (21), a first battery cell (21) being a cylinder, and a gap being provided between the plurality of first battery cells (21);
provide a second battery cell (22), the second battery cell (22) being disposed in the gap between the plurality of first battery cells (21), and the second battery cell (22) being configured to deform under a squeeze of the plurality of first battery cells (21) to fit a shape of the gap; and
provide a box (11), the box (11) being configured to accommodate the plurality of first battery cells (21) and the second battery cell (22);
provide a pressure sensor (223), and the pressure sensor (223) is configured to detect stress states of a plurality of first battery cells (21) squeezing the second battery cell (22).

## Patentansprüche

1. Batterie, umfassend:
eine Vielzahl von ersten Batteriezellen (21), wobei eine erste Batteriezelle (21) ein Zylinder ist und ein Spalt zwischen der Vielzahl von ersten Batteriezellen (21) vorgesehen ist;
eine zweite Batteriezelle (22), die in dem Spalt zwischen der Vielzahl von ersten Batteriezellen (21) angeordnet ist, wobei die zweite Batteriezelle (22) ausgelegt ist, sich unter einem Zusammendrücken durch die Vielzahl von ersten Batteriezellen (21) zu verformen, um sich an eine Form des Spalts anzupassen; und
einen Behälter (11), der ausgelegt ist, die Vielzahl von ersten Batteriezellen (21) und die zweite Batteriezelle (22) aufzunehmen,
wobei die zweite Batteriezelle (22) mit einem Drucksensor (223) versehen ist und der Drucksensor (223) ausgelegt ist, Spannungszustände einer Vielzahl von ersten Batteriezellen (21), die die zweite Batteriezelle (22) zusammendrücken, zu erfassen.

2. Batterie nach Anspruch 1, wobei die Batterie umfasst:
eine Vielzahl von Batteriezellengruppen, die in einer ersten Richtung angeordnet sind, wobei jede der Vielzahl von Batteriezellengruppen eine Vielzahl von ersten Batteriezellen (21) umfasst, die in einer zweiten Richtung angeordnet sind, wobei die erste Richtung, die zweite Richtung und eine axiale Richtung der ersten Batteriezelle (21) senkrecht zueinander sind, und wobei eine Vielzahl von zweiten Batteriezellen (22) jeweils in einer Vielzahl von Spalten zwischen zwei benachbarten Batteriezellengruppen der Vielzahl von Batteriezellengruppen angeordnet sind.

3. Batterie nach Anspruch 2, wobei Orthogonalprojektionen von Achsen aller ersten Batteriezellen (21) in den zwei benachbarten Batteriezellengruppen auf eine erste Ebene (12) nicht zusammenfallen und die erste Ebene (12) senkrecht zu der ersten Richtung ist.

4. Batterie nach Anspruch 3, wobei die Orthogonalprojektionen der Achsen aller ersten Batteriezellen (21) in den zwei benachbarten Batteriezellengruppen auf die erste Ebene (12) gleichmäßig verteilt sind.

5. Batterie nach Anspruch 3 oder 4, wobei die zweite Batteriezelle (22) in einem Spalt angeordnet ist, der durch drei benachbarte erste Batteriezellen (21) in den zwei benachbarten Batteriezellengruppen gebildet wird.

6. Batterie nach Anspruch 5, wobei Abschnitte der drei benachbarten ersten Batteriezellen (21) entlang einer zweiten Ebene drei Kreise sind, wobei jeweils zwei der drei Kreise Umkreise voneinander sind, und die zweite Ebene senkrecht zu der axialen Richtung der ersten Batteriezelle (21) ist.

7. Batterie nach einem der Ansprüche 1 bis 6, wobei die zweite Batteriezelle (22) mit einem Flüssigkeitslecksensor (222) versehen ist und der Flüssigkeitslecksensor (222) ausgelegt ist, zu erfassen, ob die erste Batteriezelle (21) und/oder die zweite Batteriezelle (22) Flüssigkeit leckt.

8. Batterie nach Anspruch 7, wobei der Flüssigkeitslecksensor (222) an einem Ende der zweiten Batteriezelle (22) angeordnet ist, das nahe an einer ersten Elektrodenklemme (211) der ersten Batteriezelle (21) liegt.

9. Batterie nach Anspruch 1, wobei der Drucksensor (223) um die zweite Batteriezelle (22) herum angeordnet ist.

10. Batterie nach einem der Ansprüche 1 bis 9, wobei die Batterie eine erste Sammelschienenkomponente (131) und eine zweite Sammelschienenkomponente (132) umfasst, und
die erste Sammelschienenkomponente (131) ausgelegt ist, eine elektrische Verbindung zwischen einer Vielzahl von ersten Batteriezellen (21) zu ermöglichen, um einen ersten Stromversorgungskreis zu bilden; und
die zweite Sammelschienenkomponente (132) ausgelegt ist, eine elektrische Verbindung zwischen einer Vielzahl von zweiten Batteriezellen (22) zu ermöglichen, um einen zweiten Stromversorgungskreis zu bilden, und der erste Stromversorgungskreis und der zweite Stromversorgungskreis jeweils elektrische Energie für unterschiedliche Stromverbrauchsmodule bereitstellen.

11. Stromverbrauchsvorrichtung, umfassend: die Batterie nach einem der Ansprüche 1 bis 10, wobei die Batterie ausgelegt ist, elektrische Energie für die Stromverbrauchsvorrichtung bereitzustellen.

12. Verfahren zum Herstellen einer Batterie, umfassend:
Bereitstellen einer Vielzahl von ersten Batteriezellen (21), wobei eine erste Batteriezelle (21) ein Zylinder ist und ein Spalt zwischen der Vielzahl von ersten Batteriezellen (21) vorgesehen ist;
Bereitstellen einer zweiten Batteriezelle (22), wobei die zweite Batteriezelle (22) in dem Spalt zwischen der Vielzahl von ersten Batteriezellen (21) angeordnet ist und die zweite Batteriezelle (22) ausgelegt ist, sich unter einem Zusammendrücken durch die Vielzahl von ersten Batteriezellen (21) zu verformen, um sich an eine Form des Spalts anzupassen; und
Bereitstellen eines Behälters (11), wobei der Behälter (11) ausgelegt ist, die Vielzahl von ersten Batteriezellen (21) und die zweite Batteriezelle (22) aufzunehmen;
Bereitstellen eines Drucksensors (223), wobei der Drucksensor (223) ausgelegt ist, Spannungszustände einer Vielzahl von ersten Batteriezellen (21), die die zweite Batteriezelle (22) zusammendrücken, zu erfassen.

13. Vorrichtung zum Herstellen einer Batterie, umfassend: ein Bereitstellungsmodul (410), wobei das Bereitstellungsmodul (410) ausgelegt ist:
eine Vielzahl von ersten Batteriezellen (21) bereitzustellen, wobei eine erste Batteriezelle (21) ein Zylinder ist und ein Spalt zwischen der Vielzahl von ersten Batteriezellen (21) vorgesehen ist;
eine zweite Batteriezelle (22) bereitzustellen, wobei die zweite Batteriezelle (22) in dem Spalt zwischen der Vielzahl von ersten Batteriezellen (21) angeordnet ist und die zweite Batteriezelle (22) ausgelegt ist, sich unter einem Zusammendrücken durch die Vielzahl von ersten Batteriezellen (21) zu verformen, um sich an eine Form des Spalts anzupassen; und
einen Behälter (11) bereitzustellen, wobei der Behälter (11) ausgelegt ist, die Vielzahl von ersten Batteriezellen (21) und die zweite Batteriezelle (22) aufzunehmen;
einen Drucksensor (223) bereitzustellen, wobei der Drucksensor (223) ausgelegt ist, Spannungszustände einer Vielzahl von ersten Batteriezellen (21), die die zweite Batteriezelle (22) zusammendrücken, zu erfassen.

## Revendications

1. Batterie, comprenant :
une pluralité de premiers éléments de batterie (21), un premier élément de batterie (21) étant un cylindre, et un espace étant prévu entre la pluralité de premiers éléments de batterie (21) ;
un second élément de batterie (22) disposé dans l'espace entre la pluralité de premiers éléments de batterie (21), le second élément de batterie (22) étant configuré pour se déformer sous une pression de la pluralité de premiers éléments de batterie (21) pour s'adapter à une forme de l'espace ; et
un boîtier (11) configuré pour recevoir la pluralité de premiers éléments de batterie (21) et le second élément de batterie (22),
dans lequel le second élément de batterie (22) est pourvu d'un capteur de pression (223), et le capteur de pression (223) est configuré pour détecter des états de contrainte d'une pluralité de premiers éléments de batterie (21) pressant le second élément de batterie (22).

2. Batterie selon la revendication 1, la batterie comprenant :
une pluralité de groupes d'éléments de batterie disposés dans une première direction, chacun de la pluralité de groupes d'éléments de batterie comprenant une pluralité de premiers éléments de batterie (21) disposés dans une seconde direction, la première direction, la seconde direction et une direction axiale du premier élément de batterie (21) étant perpendiculaires les unes aux autres, et une pluralité de seconds éléments de batterie (22) étant respectivement disposés dans une pluralité d'espaces entre deux groupes d'élément de batterie adjacents de la pluralité de groupes d'éléments de batterie.

3. Batterie selon la revendication 2, dans laquelle des projections orthographiques d'axes de tous les premiers éléments de batterie (21) dans les deux groupes d'éléments de batterie adjacents sur un premier plan (12) ne coïncident pas, et le premier plan (12) est perpendiculaire à la première direction.

4. Batterie selon la revendication 3, dans laquelle des projections orthographiques des axes de tous les premiers éléments de batterie (21) dans les deux groupes d'éléments de batterie adjacents sur le premier plan (12) sont réparties uniformément.

5. Batterie selon la revendication 3 ou 4, dans laquelle le second élément de batterie (22) est situé dans un espace formé par trois premiers éléments de batterie adjacents (21) dans les deux groupes d'éléments de batterie adjacents.

6. Batterie selon la revendication 5, dans laquelle des sections des trois premiers éléments de batterie adjacents (21) le long d'un second plan sont trois cercles, à chaque fois deux des trois cercles sont des cercles circonscrits l'un de l'autre, et le second plan est perpendiculaire à la direction axiale du premier élément de batterie (21).

7. Batterie selon l'une quelconque des revendications 1 à 6, dans laquelle le second élément de batterie (22) est pourvu d'un capteur de fuite de liquide (222), et le capteur de fuite de liquide (222) est configuré pour détecter si du liquide fuit du premier élément de batterie (21) et/ou du second élément de batterie (22).

8. Batterie selon la revendication 7, dans laquelle le capteur de fuite de liquide (222) est disposé à une extrémité du second élément de batterie (22) proche d'une première borne d'électrode (211) du premier élément de batterie (21).

9. Batterie selon la revendication 1, dans laquelle le capteur de pression (223) est disposé autour du second élément de batterie (22).

10. Batterie selon l'une quelconque des revendications 1 à 9, la batterie comprenant un premier composant de bus (131) et un second composant de bus (132), et
le premier composant de bus (131) est configuré pour permettre une connexion électrique entre une pluralité de premiers éléments de batterie (21) pour former un premier circuit d'alimentation électrique ; et
le second composant de bus (132) est configuré pour permettre une connexion électrique entre une pluralité de seconds éléments de batterie (22) pour former un second circuit d'alimentation électrique, et le premier circuit d'alimentation électrique et le second circuit d'alimentation électrique fournissent respectivement de l'énergie électrique à différents modules de consommation d'énergie.

11. Dispositif de consommation d'énergie, comprenant : la batterie selon l'une quelconque des revendications 1 à 10, la batterie étant configurée pour fournir de l'énergie électrique au dispositif de consommation d'énergie.

12. Procédé de production d'une batterie, comprenant :
la fourniture d'une pluralité de premiers éléments de batterie (21), un premier élément de batterie (21) étant un cylindre, et un espace étant prévu entre la pluralité de premiers éléments de batterie (21) ;
la fourniture d'un second élément de batterie (22), le second élément de batterie (22) étant disposé dans l'espace entre la pluralité de premiers éléments de batterie (21), et le second élément de batterie (22) étant configuré pour se déformer sous une pression de la pluralité de premiers éléments de batterie (21) pour s'adapter à une forme de l'espace ; et
la fourniture d'un boîtier (11), le boîtier (11) étant configuré pour recevoir la pluralité de premiers éléments de batterie (21) et le second élément de batterie (22) ;
la fourniture d'un capteur de pression (223), et le capteur de pression (223) est configuré pour détecter des états de contrainte d'une pluralité de premiers éléments de batterie (21) pressant le second élément de batterie (22).

13. Dispositif de production d'une batterie, comprenant : un module de fourniture (410), le module de fourniture (410) étant configuré pour :
fournir une pluralité de premiers éléments de batterie (21), un premier élément de batterie (21) étant un cylindre, et un espace étant prévu entre la pluralité de premiers éléments de batterie (21) ;
fournir un second élément de batterie (22), le second élément de batterie (22) étant disposé dans l'espace entre la pluralité de premiers éléments de batterie (21), et le second élément de batterie (22) étant configuré pour se déformer sous une pression de la pluralité de premiers éléments de batterie (21) pour s'adapter à une forme de l'espace ; et
fournir un boîtier (11), le boîtier (11) étant configuré pour recevoir la pluralité de premiers éléments de batterie (21) et le second élément de batterie (22) ;
fournir un capteur de pression (223), et le capteur de pression (223) est configuré pour détecter des états de contrainte d'une pluralité de premiers éléments de batterie (21) pressant le second élément de batterie (22).
